# EUROPEAN PATENT APPLICATION

(11) **EP 4 197 620 A1**
(43) Date of publication of application: **21.06.2023**
(21) Application number: 21214579.1
(22) Date of filing: 15.12.2021
(51) Int. Cl.: B01D 53/62, B01D 53/04, B01D 53/32, B01D 53/82, B01D 53/86, H01M 8/0668, H01M 8/0662, C01B 3/58

(54) **PURIFICATION DEVICE AND PURIFICATION METHOD FOR CO REMOVAL FROM HYDROGEN BASED FUEL GAS**

(71) Applicant: AVL List GmbH, 8020 Graz (AT); AVL Fuel Cell Canada Inc., Burnaby, British Columbia V5A4N8 (CA)
(72) Inventor: Cimenti, Max, Vancouver, V7K 1X7 (CA)
(74) Representative: Gamper, Bettina

(57) **Abstract**

The present invention relates to a purification device and method for removal of carbon monoxide (CO) from a hydrogen containing fuel gas for a fuel cell, wherein the purification device comprises a catalytic module (10) configured to adsorb a carbon monoxide (CO) fraction contained in the fuel gas by a catalyst substrate (11) arranged to be exposed to a surrounding of the fuel gas in a purification chamber (12), and a recovery module (20) configured to recover the catalyst substrate (11) from adsorbed carbon monoxide (CO) by effecting an anodic potential of the catalyst substrate (11) versus the fuel gas surrounding for electrochemical oxidation of absorbed carbon monoxide.

## Description

The present application relates to a purification device and a purification method for removal of carbon monoxide from a hydrogen containing fuel gas, particularly a hydrogen-based fuel gas meant for supplying a fuel cell.

### Technical field of the invention

The purification according to the invention is suitable to be integrated in a fuel cell system, in particular on-board of a fuel cell vehicle having a proton exchange membrane fuel cell (PEM-FC) for enabling purification of hydrogen (H₂)-based fuel gas stored in a fuel gas tank of the fuel cell system. Nevertheless, despite such advantage of securing fuel gas quality and avoiding fuel cell deterioration on a user side, like in transportation applications, the purification according to the invention might also embody suitable applications attractive on a producer or provider side in the supply chain of hydrogen-based fuel gases to ensure quality standards with respect to carbon monoxide (CO) content and removal of same.

### Background of the invention

It is expected that supply of so-called green hydrogen which is produced from electrolysis using renewable electricity and constitutes an inherently pure basis for fuel gases will not reach to completely fulfill the market demands in the short term, at least most likely not within a time period of the next 5 to 10 years or more. Currently blue- and grey-hydrogen derived hydrogen from reforming hydrocarbons of renewable or fossil carbon resources take up the main market shares and will continue to do so in the next years.

Due to their carbon origin, blue- and grey-hydrogen based fuel gases contain residual levels of carbon monoxide and other species like sulfur that can poison Platinum or Platinum Group Metal (PGM)-type catalysts used in hydrogen consuming fuel cells. Removal of carbon monoxide from hydrogen down to sub-ppm levels is an expensive effort resulting in a significant increase in production costs of hydrogen fuel gases for meeting required quality standards, and as a result, increases cost-of-operation for fuel cell type energy conversion systems.

Several methods have been proposed for purification of hydrogen produced from reforming of hydrocarbons. Some of these have reached commercial maturity and are extensively used in petrochemical and chemical industry, such as for example: palladium membrane purifiers, pressure swing adsorption, cryogenic separation amongst others. The named methods are feasible on a producer side, but not easily scalable for transportation applications on a user side, and in general they are not expected to meet cost targets and versatility as required for PEM FC powered vehicles.

US 9,263,756 B1 discloses a method for an alternative operation principle of an electrolyzer used in reverse-mode as to serve for removal of ppm level carbon monoxide from hydrogen stream while capturing and dissolving produced carbon dioxide in water to prevent release carbon dioxide in the atmosphere. As in accordance with this principle, as well as by nature of the general task and basic configuration of any electrolyzer, said electrolyzer of the disclosed technique is immersed in water having a separately sealed arrangement of electrodes in compartments and requiring flow-field plates for submersed guidance and interaction with the hydrogen stream. Since electrolyzers are basically configured for stationary use in chemical production applications, the disclosed configuration might generally be feasible, but not be practically developed and matured or favorably for transportation application. Thus, there is room for improvements and further development for on-board suitable fuel gas purification equipment.

The cost effectiveness of fuel cell powered heavy duty transportation is strongly dependent on the total-cost-of-ownership (TCO) of the vehicle, which in turn is favorable when the cost of fuel gas is low. As a result, there is demand for a compact, versatile and reliable on-board hydrogen purification sub-system which could significantly reduce the total-cost-of-ownership of FC trucks or other FC heavy-duty vehicles, if grey or blue hydrogen were to be used for fuel gas.

### Summary of the Invention

It is an object of the invention to overcome the described problems in connection with associated costs and removal of residual carbon monoxide in hydrocarbon derived hydrogen and to provide a purification suitable for on-board operation in a suitable manner for transportation applications. The object is solved by a purification device having the features of claim 1 and a purification method having the steps of claim 16. Further features and details of the invention result from the dependent claims, the specification, and the drawings. Features and details described in connection with the purification device according to the invention naturally also apply in connection with the purification method according to the invention, and vice versa, so that the individual aspects of the invention are or can always be mutually referred to in the disclosure.

The invention proposes a purification device for removal of carbon monoxide from a hydrogen containing fuel gas for a fuel cell. The purification device comprises a catalytic module and a recovery module. The catalytic module is configured to adsorb a carbon monoxide fraction contained in the fuel gas and comprises a catalyst substrate arranged to be exposed to a surrounding of the fuel gas in a purification chamber. The catalyst substrate comprises at least in a surface region, a catalytic material containing one of Platinum, another Platinum Group Metal (PGM) and/or an alloy thereof, capable of adsorbing carbon monoxide. The recovery module is configured to recover the catalyst substrate from adsorbed carbon monoxide by electrochemical oxidation and comprises voltage generation means and electrode means. The voltage generation means is configured to supply an anodic potential voltage for electrochemical oxidation of absorbed carbon monoxide. The electrode means is configured to apply the anodic potential voltage to the catalyst substrate effecting a corresponding anodic potential of the catalyst substrate versus the fuel gas surrounding.

Moreover, the invention analogously proposes a purification method for removal of carbon monoxide from a hydrogen containing fuel gas for a fuel cell comprising a step of adsorbing a carbon monoxide fraction while exposing a catalyst substrate and recovering the catalyst substrate while effecting an anodic potential of the same. The step of adsorbing carbon monoxide refers to a carbon monoxide fraction contained in the fuel gas. The step of exposing the catalyst substrate refers to exposing the catalyst substrate to a surrounding of the fuel gas, wherein the catalyst substrate contains one of Platinum, another Platinum Group Metal (PGM) and/or an alloy thereof, capable of adsorbing carbon monoxide. The step of recovering the catalyst substrate refers to applying an anodic potential voltage for electrochemical oxidation of absorbed carbon monoxide to the catalyst substrate. The step of effecting an anodic potential refers to an anodic potential of the catalyst substrate versus the fuel gas surrounding that corresponds to the anodic potential voltage.

Hence, for the first time, the invention provides a device and method where a purification from carbon monoxide followed by electrochemical oxidation is both taking place in an open fuel gas surrounding, i.e. in the sense of a device, in a single-chamber design enclosing the fuel gas and elements of the device, which is particularly favorable for gas stream treatment applications.

A "surrounding of the fuel gas" or "fuel gas surrounding" with respect to any element of the invention's embodiment is to be considered within the meaning of the present invention as a non-isolated surface contact, i.e. without sealed or liquid-phase based barrier, or compartments between electrodes or any such elements and the fuel gas.

"Platinum Group Metals (PGM)" within the meaning of the present invention contains precious metallic elements clustered together in the periodic table including Ruthenium, Rhodium, Palladium, Osmium, Iridium, and Platinum. These materials are used for the catalytic adsorption of carbon monoxide, as well as for the electrochemical oxidation as well as for a preferable optional implementation of hydrogen pumping, as described later for the respective embodiment.

In more detail to the reactions involved, hydrogen gas cleaning from carbon monoxide is achieved by adsorption on Platinum (Pt) or other PGM catalysts, wherein, at least upon a complete saturation of adsorption of carbon monoxide on the catalyst, a catalyst regeneration is achieved by electrochemical oxidation reaction of the adsorbed carbon monoxide and other gaseous contaminants. Furthermore, as described in an embodiment, a preferable electrochemical oxidation is achieved by hydrogen pumping using a specific electrode configuration. Some gas species e.g. CO, H₂S quickly adsorb on Platinum and on other PGM provided on a catalyst. The adsorption simultaneously causes the removal of these species, particularly a residual carbon monoxide fraction from the gas stream of the fuel gas while poisoning the catalyst but avoiding poisoning of catalytic features or membranes of a downstream arranged fuel cell. The adsorbed species can be oxidized electrochemically, if an anode potential is raised above specific values depending on the species and temperature, which is under most application conditions for carbon monoxide typically more than 0.6 V versus reversible hydrogen electrode (RHE). After electrochemical oxidation the poisoning species, i.e. the carbon monoxide formerly absorbed on the catalyst, is transformed into inert species, in this case mainly carbon dioxide (CO₂).

The presence of water is of importance for the above mentioned reactions. This applies all the more, if for example the purification device is placed next to a hydrogen ejector, since the ejected hydrogen gas is usually dry. Hence the purification device and the purification method may require some water supply for humidification of the fuel gas to be viable. The same applies to the proton exchange membranes used in the purification device which need at least some level of ambient humidity or supplemental hydration to absorb water needed to transport protons. In case of a humidity starvation, especially under use of dry gas, the electrolyte will not function.

A particular advantage of the invention is that the open fuel gas surrounding or open single-chamber design in the purification device enables to achieve within a compact configuration, a comparably high fuel gas throughput and carbon monoxide removal.

Furthermore, in comparison to alternative options of on-board feasible hydrogen purification methods, an integration of the purification device and method into a fuel cell system is relatively easy to realize.

In providing a suitable technique for on-board purification, the invention boasts the economic advantage of reducing the total-cost-of-ownership in fuel cell powered transportation applications, if grey hydrogen is used as fuel gas, and especially favorable for commercially used vehicles, like trucks or other heavy-duty vehicles down to passenger cars.

A further advantage of the invention is the energy efficiency, since the device and method provide an almost passive solution requiring only small and intermittent power input which is further beneficial to low operational costs.

According to a preferred embodiment, the recovery module comprises a membrane electrode assembly (MEA) configured to constitute a hydrogen pump. The membrane electrode assembly includes a proton-exchange membrane configured to be permeable for diffusion of hydrogen derived protons, and a first electrode and a second electrode each of the electrodes being arranged on one of two opposite sides of the proton-exchange membrane in surface contact with the proton-exchange membrane, respectively. The first electrode and the second electrode are configured to polarize the proton-exchange membrane in a width direction when applying the anodic potential voltage across the surface contacts, wherein the polarized proton-exchange membrane effects pumping of hydrogen protons in the width direction. At least one of the first electrode and the second electrode being arranged in surface contact with the catalyst substrate exposed to the fuel gas surrounding for applying the anodic potential voltage to the catalyst substrate.

According to an advantageous embodiment, the catalyst substrate is formed in a pair of substrate layers providing non-facing catalytic surfaces exposed to the fuel gas surrounding, and the membrane electrode assembly and the pair of substrate layers of the catalyst substrate form a sandwich structure. The membrane electrode assembly is arranged in between the pair of substrate layers with the first electrode and the second electrode arranged in surface contact with one adjacent outer substrate layer of the pair of substrate layers, respectively.

According to an aspect of the invention, both of the non-facing catalytic surfaces of the pair of substrate layers being exposed together to the surrounding fuel gas in a single-chamber constituted by one common inner space of the purification chamber.

An advantageous embodiment of the purification device comprises a monitoring module configured to monitor a level of carbon monoxide saturation of the catalytic substrate. The monitoring module includes pulse generation means, sensor means and monitoring means. The pulse generation means is configured to provide pulses to be applied via the first electrode and the second electrode to the sandwich structure formed by the membrane electrode assembly and the pair of substrate layers of the catalyst substrate. The sensor means is configured to detect a pulse response characterized by a voltage difference between the first electrode and the second electrode. The monitoring means is configured to compare voltage differences of detected pulse responses with at least one predetermined threshold indicative for a carbon monoxide saturation level of the catalyst substrate.

In a further advantageous embodiment of the purification device further comprises a cleaning control module configured to control a cleaning cycle for the catalyst substrate by means of the recovery module. The cleaning control module includes determination means and cycle control means. The determination means configured to determine timing of starting and stopping of at least one cleaning cycle depending on a monitored level of carbon monoxide saturation of the catalytic substrate. The cycle control means configured to control, during the at least one cleaning cycle, a time period and/or a modulation of the anodic potential voltage.

According to an aspect of the invention, the purification device comprises voltage setting means configured to set a voltage potential of the anodic potential voltage supplied and applied by the recovery module. The voltage setting means sets the anodic potential voltage so as to reach at least a minimum reaction potential required for initiating electrochemical oxidation reaction of carbon monoxide into carbon dioxide in the presence of water for oxygen donation, preferably to at least 0.6 V.

According to an embodiment, the purification device comprises a housing module configured to enclose the catalytic module and the recovery module with the surrounding fuel gas. The housing module includes an inlet and an outlet for guiding a fuel cell supply gas stream of the fuel gas through the purification chamber. The catalytic module and the recovery module being arranged to expose the catalyst substrate or each of substrate layers thereof to the fuel cell supply gas stream of the fuel gas in a single-chamber constituted by one common inner space of the purification chamber.

In an advantageous embodiment of the latter, the housing module has a tubular shape, wherein at least one dimension of the inlet and/or outlet is adapted to a dimension of a tubing guiding the fuel gas, in particular the tubing of an anode supply line for a fuel cell.

In a further advantageous embodiment the catalytic module and the recovery module being formed and arranged to expose the catalyst substrate, in particular substrate layers, inclined to a flow direction of the fuel gas.

In a preferred embodiment, the catalytic module and the recovery module being formed and arranged in radial sections each radially aligned with respect to a cross-section of a gas stream of the fuel gas flowing through the purification chamber, preferably aligned to form an evenly distributed diametrical arrangement. Each radial section is constituted by the sandwich structure formed by the membrane electrode assembly and the pair of substrate layers of the catalyst substrate providing non-facing catalytic surfaces exposed to the fuel gas.

In a further preferred embodiment of the latter, a polarization the radial section is set to constitute same polarities of exposed catalytic surfaces opposing from adjacent radial sections, wherein the polarities being alternating between each of the adjacent radial sections.

In an advantageous embodiment of the latter, the sandwich structure formed by the membrane electrode assembly and one of the pair of substrate layers of the catalyst substrate constitutes a flexible structure, wherein the radial sections being, at least partially, deflectable under the influence of electrostatic forces effected by the alternating polarities between adjacent radial sections.

According to an aspect of the invention a fuel cell system, preferably an on-board fuel cell system for a vehicle, comprises the purification device, at least a fuel cell, a fuel gas tank, and an anode supply line connecting the fuel gas tank and the fuel cell, wherein the purification device is arranged in the anode supply line.

In a more specific embodiment of the latter, the fuel cell system according further comprises an ejector device arranged in the anode supply line for ejecting a primary fuel gas stream and a secondary fuel gas stream, wherein the purification device is arranged between the ejector device and the fuel cell. This embodiment benefits from a supplemental external water supply for humidification of the dry ejected fuel gas or for hydration of the proton exchange membrane and electrolyte.

According to another aspect of the invention, there are provided further additional method steps of the purification method of analog functionality to the embodiments of the purification device including a step of hydrogen pumping by means of a proton-exchange membrane, a monitoring step for monitoring a level of carbon monoxide saturation of the catalytic substrate, a cleaning step for controlling a cleaning cycle for the catalyst substrate by performance of the recovery step, or a step of setting a voltage potential of the anodic potential voltage

Further objectives, advantages, features and applications of the present invention arise from the following description of the exemplary embodiments with reference to the drawings. In the drawing:
- Fig. 1: shows a schematic representation of the basic functionality of the purification device according to a basic first embodiment of the present invention;
- Fig. 2: shows a schematic cross-section of an effective design of the purification device according to a preferred second embodiment of the present invention;
- Fig. 3: shows a collective diagram representing a current pulse and a voltage pulse response in a monitoring of CO saturation according to an aspect of the present invention; and
- Fig. 4: shows a collective diagram representing an anodic potential voltage and a corresponding current in a cleaning cycle during a recovery step of the catalyst substrate according to an aspect of the present invention.

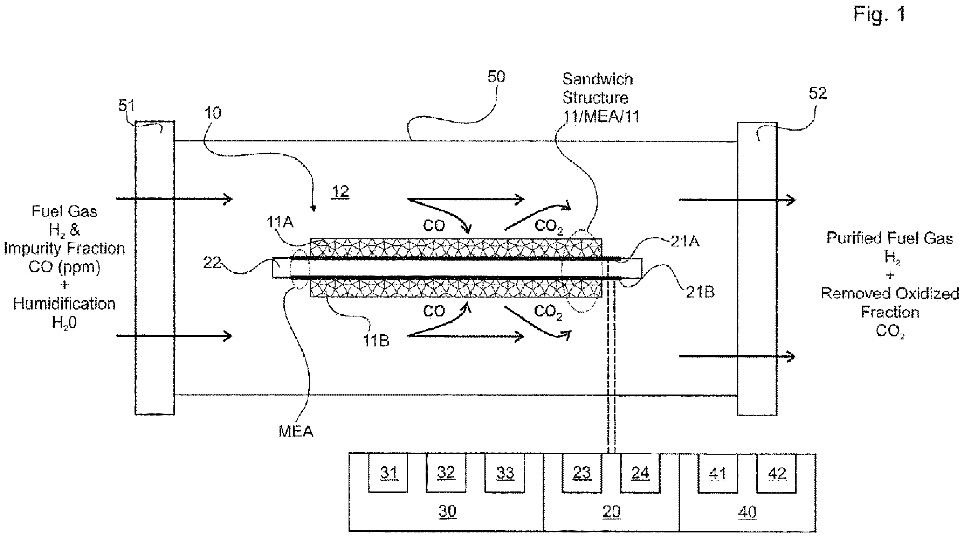

Fig. 1 shows a basic constellation of the purification device arranged in a fuel gas supply line connecting a fuel gas tank to an anode side of a fuel cell, more particular between an ejector or blower of a fuel gas loop and a fuel stack inlet (not illustrated). The purification device has a housing module 50 in a tubular design fitted to a diameter or volume stream capacity of a piping in a respective section of fuel gas supply line so as to minimize a flow resistance within the fuel gas stream caused by the purification device. The housing module 50 has an open inner space representing a purification chamber 12 between an inlet 51 and an outlet 52 which, in the depicted embodiment, are shaped as flange like interfaces adapted to a diameter of respective piping of fuel gas supply line. Within the purification chamber 12 there is provided and exposed a sandwich structure constituted by an in terms of functionality denoted separately but arranged integrally in a combination of a catalytic module 10 and a recovery module 20.

The catalytic module 10 has a catalyst substrate 11 formed in a pair of two substrate layers 11A and 11B. The substrate layers 11A and 11B represent the outermost elements of the sandwich structure, wherein the outer surfaces of the same provide a pair of non-facing catalytic surfaces. The catalyst substrate 11 has a preferably porous structure and rough catalytic surfaces to maximize a spatial capacity of catalytic active area. Furthermore, the catalyst substrate 11 is electrically conductive. The catalyst substrate 11 contains high surface area Platinum powder or powder of a blend of Platinum Group Metals (PGM) that can adsorb and subsequently oxidize carbon monoxide from the hydrogen fuel gas.

Both of the substrate layers 11A and 11B and their non-facing catalytic surfaces are exposed to the same gas volume of the fuel gas in a single-compartment cell arrangement, i.e. a single-chamber arrangement constituted by a common inner space of the purification chamber 12 without any separation or sealing of compartments in between. Upon removal and adsorption of carbon monoxide, the purified hydrogen is fed to a fuel cell stack. The purification device can operate in a passive manner with no power applied, until the entire Platinum-surface of the catalyst substrate 11 is saturated by carbon monoxide.

The recovery module 20 has, with respect to the sandwich structure, a membrane electrode assembly (MEA) of a proton exchange membrane (PEM) 22 and two electrodes 21A, 21B each of which covers in surface contact one of two opposite sides of the proton exchange membrane 22 so as to electrically contact the proton exchange membrane 22 across the surface from both sides, and thereby electrostatically polarizing the proton exchange membrane 22 in a width direction. The as formed membrane electrode assembly is arranged in between the pair of substrate layers 11A and 11B of the catalyst substrate 11, wherein each of the two electrodes 21A, 21B covers in surface contact the inner side of one of the two substrate layers 11A and 11B so as to electrically contact the substrate layers 11A and 11B across the surface from the inner sider, respectively.

There are electrical connections between the electrodes 21A, 21B and a voltage generation means 23 provided by an external power supply source and voltage setting means 24 realized by a controllable transistor. The voltage generation means 23 applies via the electrodes 21A, 21B an anodic potential voltage set by the voltage setting means 24 for initiating a reaction of electrochemical oxidation of carbon monoxide absorbed on the substrate layers 11A and 11B of the catalyst substrate 11 into desorbing carbon dioxide. In general, an adsorbed species can be oxidized electrochemically, if the anode potential is raised above specific values depending on the species and temperature, which is for carbon monoxide under operation condition typically > 0.6 V vs RHE. After electrochemical oxidation the poisoning species are transformed into inert species, which is in the present case mainly carbon dioxide and water.

It is to be noted that the symmetrical configuration of the sandwich structure as illustrated in Fig. 1 is also functionally feasible by a half cell structure comprising only one catalyst substrate 11 contacted by one electrode means 21 and without proton exchange membrane 22, which is defined as the most basic configuration according to the invention.

However, in a more effective design, a preferred embodiment of the invention constitutes the illustrated symmetrical configuration of the sandwich structure which has the further remarkable advantage of using the membrane electrode assembly to function as an electrolyzer. The electrolysis separates water molecules of the humidified fuel gas into protons (H+) moved through the proton exchange membrane 22 by the power of an applied voltage via the electrodes 21A, 21B, and into oxygen needed for the electrochemical oxidation reaction of the adsorbed carbon monoxide (CO) into carbon dioxide (CO₂).

In other words, the electrodes 21A, 21B which are in contact with the proton exchange membrane (PEM) polarize the same using an external power source, wherein both electrodes 21A, 21B are exposed to the same gas stream or volume. The application of external power causes hydrogen pumping (or H₂-pumping) across the proton exchange membrane 22, pushes protons in the same direction as the applied current. That is, one catalytic substrate layer 11A, B in combination with one electrode 21A, 21B is undergoing hydrogen oxidation (anodic polarization) while hydrogen evolution occurs on the other one (cathodic polarization).

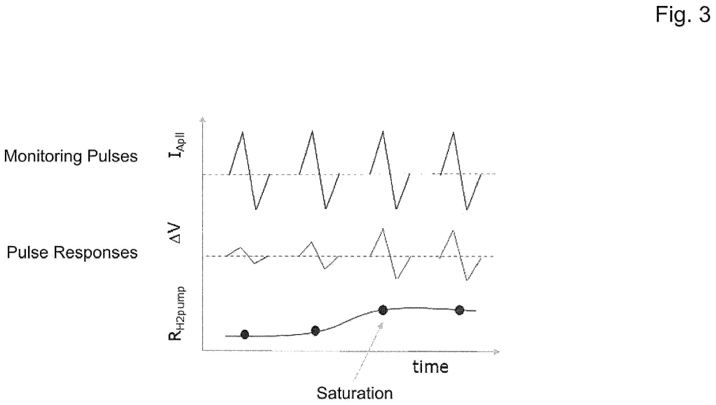

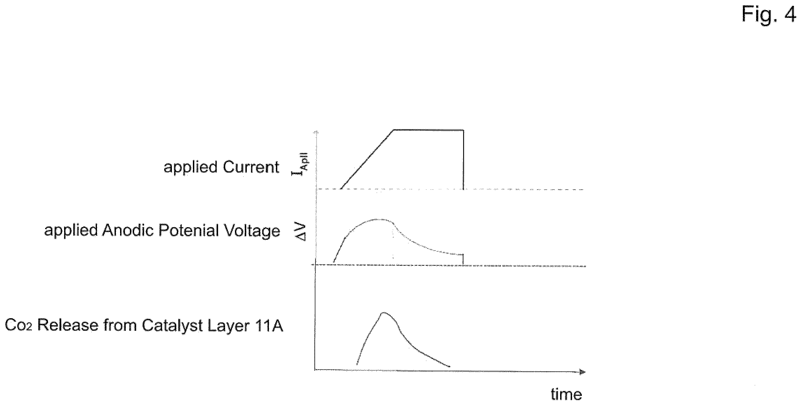

Furthermore, in Fig. 1 are shown further sections functionally denoted as a monitoring module 30 and a cleaning control module 40. The monitoring module 30 represents the embodied provision of a pulse generation means 31 realized by a controllable power supply source, a sensor means 32 realized by a voltage- and or current sensor and a monitoring means 33 realized by a microcontroller. Further operation of said means will become apparent in the context of Fig. 3. The cleaning control module 40 represents the embodied provision of a determination means 41 and a cycle control means 42, both realized by a microcontroller. Further operation of said means will become apparent in the context of Fig. 4.

The purification device is fed to one side with humidified grey hydrogen as a fuel gas containing carbon (CO) monoxide at ppm-level. The carbon monoxide CO is adsorbed on a Platinum surface for as long as it takes to form a CO-monolayer. During this purification operation the purification device does not require any power input. Furthermore, the level of purification is proportional to the chances for a given gas volume to contact the electrode surface, therefore a following second embodiment relates to improvements of the design and configuration to maximize the contact and interaction, in particular by means of convective or gas mixing features to maximize the volume of gas interacting with the Platinum surface.

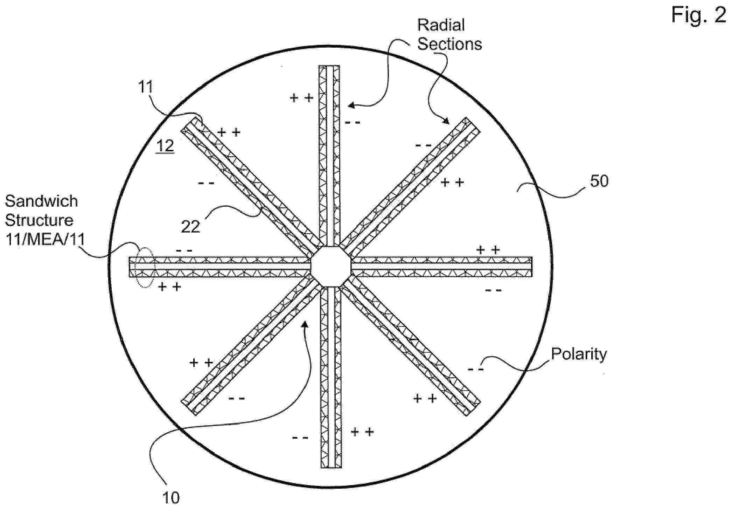

Fig. 2 shows a cross-section of an embodiment of the purification device having an optimized design in several aspects.

One first aspect refers to an integration of the electrodes 21A, 21B and the substrate layers 11A and 11B in the same element. In the sandwich structure of Fig. 1, the electrodes 21A, 21B are separately illustrated and denoted in terms of their functionality and in sake of easing comprehensibility of the first basic embodiment. In this second embodiment, the electrodes 21A, 21B constitute an integral part of the substrate layers 11A and 11B which is a simple be to realized modification, if considering a sufficiently well electrically conductivity of the catalyst substrate 11. In this case a redundant electrode structure can be omitted as long as an evenly distributed voltage across the whole surface area of the proton exchange membrane 22 and the substrate layers 11A, 11B can be ensured. This can be provided by a conductively and catalytically coated gas diffusion layer (GDL). Hence, in this case, the membrane electrode assembly (MEA) using the electrically conductive substrate layers 11A, 11B directly as the electrodes 21A, 21B equally resembles as the whole sandwich structure of the catalytic module 10 and the recovery module 20 in accordance with the basic first embodiment of Fig. 1.

In another aspect of modification of the second embodiment, the catalytic module 10 and the recovery module 20 are arranged in radial sections of the sandwich structure extending diametrically through a cross-section of purification chamber 12 in the tubular housing module 50. However, the radial sections do not entirely span through an inner cross-section to maintain a common single-chamber design of the purification chamber 12 and to avoid a separation of the inner space in divided compartments.

An electrical connection between electrodes 21 in the same radial section is configured such that electrodes 21 that are polarized positively are facing each other and electrodes 21 that are polarized negatively are facing each other. Furthermore, the sandwich structure of the radial sections is partially flexible so that during anodic polarization the space between positively polarized facing electrodes 21 is reduced. This causes a reduction in a flow cross-section between the two positively polarized facing electrodes 21 which facilitates the anodic polarization resulting in a stoichiometrical reduction for enhanced effectivity in hydrogen oxidation reaction and a higher anodic potential at lower currents.

Moreover, the radial sections are arranged with a slight angle versus a flow direction of the fuel gas stream flowing through the purification device to induce a mixing effect and enhance surface interaction on the catalyst substrate 11. In addition, successive blocks of catalyst substrates and membrane electrode assemblies can be aligned in one and the same radial section in the flow direction of the fuel gas stream, wherein, as a further alternative, those blocks can be partially rotated and/or arranged with alternating opposite deflection angles between blocks to maximize mixing and convection on catalytic surfaces.

Fig. 3 shows in accordance with a functionality of monitoring CO saturation of the monitoring module 30 a collective diagram representing a current pulse and a voltage pulse response.

To detect a level of saturation of Platinum or PGM of the catalyst substrate 11, small current pulses are periodically applied by the pulse generation means 31 to the electrodes 21A, 21B. The current pulses generate a voltage difference between the electrodes that can be used to assess the level of poisoning of the Platinum surfaces. Concurrently the sensor means 32 detects a voltage response of a differential voltage between the electrodes 21A, 21B. The monitoring means 33 monitors and compares a sensor output of the sensor means 32 with predetermined threshold values giving indication of saturation levels of carbon monoxide. More particular, monitored voltage-current responses provide information on a hydrogen oxidation rate (HOR) on the catalyst substrate 11, which can be correlated to the level of saturation with carbon monoxide on of the Platinum surface, as the adsorbed species are HOR-poisons. This circumstance is reflected in a resistance value of the underlying hydrogen pumping effect. When the Platinum surface is clean from carbon monoxide, the ratio between voltage and applied current (RH2pump = DV/lappl) is almost equal to the resistance of the proton exchange membrane 22. As carbon monoxide is adsorbed on Platinum, the hydrogen oxidation rate exhibits overpotential on the anodically polarized electrodes 21A, 21B causing an apparent increase in resistance (RH2pump).Monitoring of the saturation level, i.e. the amount of carbon monoxide adsorbed on Platinum occurs periodically (e.g. every few min) during the purification operation. This is achieved by applying a fast bi-directional current pulse to the electrode-assembly. The apparent resistance (RH2pump) is used in combination to pre-existing calibration curves to trigger a cleaning cycle.

Again it is important to mention that the above mentioned reactions will only work with a required level of hydration in the membrane, thus requiring a supplemental water supply if dry gas is used.

Fig. 4 shows in accordance with a cleaning functionality of the cleaning control module 40 a collective diagram representing an anodic potential voltage and a corresponding current in a cleaning cycle during a recovery step of the catalyst substrate.

When the apparent resistance (RH2pump) reaches a predetermined threshold value, a determination means 41 of the cleaning control module 40 determines to trigger a cleaning cycle for regeneration of the catalyst substrate 11 electrically contacted by the electrodes 21A, 21B. A duration and a voltage modulation during a cleaning cycle are predetermined. The voltage setting means 24 sets a voltage of the applied anodic potential, wherein a threshold voltage level is determined by calibration testing.

The regeneration of the catalytic module 10 is achieved by sequentially applying the anodic potential voltage on both of the electrodes to cause an alternating polarization at least once on each electrode 21A, 21B. When an electrode 21A, 21B is polarized positively, the adsorbed carbon monoxide is oxidized to carbon dioxide and is removed or released by gas-phase from the Platinum-surface. Carbon dioxide does not cause poisoning of the catalyst or catalytic features in a fuel cell and can therefore be fed together with the hydrogen to the fuel cell stack. After regeneration the catalyst substrate 11 by means of the recovery module 20, the catalytic module 10 is again operational for removal and adsorption of carbon monoxide from the fuel gas, as described above.

With other words, regenerative cleaning is achieved by electrochemical oxidation of adsorbed carbon monoxide, as discussed earlier, which is done sequentially for each electrode 21A, 21B by applying a sufficiently large anodic potential ( > + 0.6 V vs the other electrode). This anodic potential can be achieved in different ways, as e.g. by transient linear pulse; exponential pulse, etc.

During the regeneration hydrogen is pumped to the proton exchange membrane 22 which separates the two electrodes 21A, 21B. While the electrodes 21A, 21B are separated, the same gas is surrounding both electrode 21A, 21B in a common single atmosphere or single-chamber, so that there cannot be distinguished an anodic compartment from a cathodic compartment as typical for an electrochemical cell like a revers used electrolyzer or fuel cell being comprised of the electrodes and an electrolyte membrane.

The purpose of polarizing the electrodes 21A, 21B is to induce the oxidation reaction of adsorbed carbon monoxide. This triggering is achieved, if the potential of each electrode 21A, 21B is sequentially raised above ~ 0.6 V versus reversible hydrogen electrode (vs. RHE). The current density at these potentials is expected to be high, possibly > 3 or 4 A per cm² for electrodes with PGM-loadings similar to those used in PEM FC (> 0.3 mg per cm²). To reach a sufficiently high electrode potential at lower current densities, it is convenient to reduce the access of hydrogen to the catalytic substrate layer 11A, 11B that is undergoing oxidation (anodic polarization) during the regeneration. This is equivalent to decreasing the stoichiometry for the hydrogen pumping effect, which is achievable by timing the regeneration with an 'idle' or 'off' operating conditions for the fuel cell, when the fuel gas flow is minimum or zero. Alternatively, advantage can be taken of the gas pressure difference naturally generated during the hydrogen pumping to induce a restriction (mass transfer) to hydrogen on the catalytic substrate layer 11A, 11B which is undergoing oxidation.

In other words, an anodic pulse will generate a decrease in pressure on the electrode undergoing a hydrogen oxidation rate (HOR) (substrate layer 11A in the example of Fog. 4) and a corresponding pressure increase on the electrode undergoing a hydrogen evolution reaction (HER). The differential pressure can be used to facilitate carbon monoxide oxidation, for example by allowing some flexibility of the membrane electrode assembly so that hydrogen access is restricted on the electrode undergoing hydrogen oxidation rate (substrate layer 11A) as a result of the differential pressure generated.

Multiple and sequential cleaning cycles can be applied to each electrode substrate layer 11A, 11B in connection with respective electrode 21A, 21B for complete removal of the adsorbed carbon monoxide. After each cleaning cycle low-current monitoring pulses can be applied to estimate the effectiveness of cleaning. When a full cleaning is achieved, the purification device returns into the purification and monitoring operation where an overall cycle is repeated.

Although exemplary embodiments were discussed in the preceding description, it should be noted that a plurality of variations is possible. In addition, it should be noted that the exemplary embodiments are only examples, which should in no way limit the scope of protection, the applications or design in any way. Instead, the preceding description should give the person skilled in the art a guideline for the implementation of at least one exemplary embodiment, wherein various changes can be undertaken, in particular with respect to the function and arrangement of the components described, without leaving the scope of protection that arises from the claims and these equivalent combinations of features.

### List of reference characters

- 10: Catalytic module
- 11: Catalyst substrate
- 11A: Substrate layer
- 11B: Substrate layer
- 12: Purification chamber
- 20: Recovery module
- 21: Electrode means
- 21A: First electrode
- 21B: Second electrode
- 22: Proton exchange membrane
- 23: Voltage generation means
- 24: Voltage setting means
- 30: Monitoring means
- 31: Pulse generation means
- 32: Sensor means
- 33: Monitoring means
- 40: Cleaning control module
- 41: Determination means
- 42: Cycle control means
- 50: Housing module
- 51: Inlet
- 52: Outlet

- MEA: Membrane electrode assembly
- CO: Carbon monoxide
- H₂: Hydrogen

## Claims

1. A purification device for removal of carbon monoxide (CO) from a hydrogen containing fuel gas for a fuel cell, comprising:
a catalytic module (10) configured to adsorb a carbon monoxide (CO) fraction contained in the fuel gas, comprising:
a catalyst substrate (11) arranged to be exposed to a surrounding of the fuel gas in a purification chamber (12), and comprising, at least in a surface region, a catalytic material containing one of Platinum, another Platinum Group Metal (PGM) and/or an alloy thereof, capable of adsorbing carbon monoxide (CO); and
a recovery module (20) configured to recover the catalyst substrate (11) from adsorbed carbon monoxide (CO) by electrochemical oxidation, comprising:
voltage generation means (23) configured to supply an anodic potential voltage for electrochemical oxidation of absorbed carbon monoxide (CO); and
electrode means (21) configured to apply the anodic potential voltage to the catalyst substrate (11) effecting a corresponding anodic potential of the catalyst substrate (11) versus the fuel gas surrounding.

2. The purification device according to claim 1, wherein the recovery module (20) comprises a membrane electrode assembly (MEA) configured to constitute a hydrogen pump means, the membrane electrode assembly (MEA) including:
a proton exchange membrane (22) configured to be permeable for diffusion of hydrogen derived protons;
a first electrode (21A) and a second electrode (21B), each of the electrodes (21) being arranged on one of two opposite sides of the proton-exchange membrane (22), in surface contact with the proton exchange membrane (22), respectively;
the first electrode (21A) and the second electrode (21B) are configured to polarize the proton-exchange membrane (22) in a width direction when applying the anodic potential voltage across the surface contacts, wherein the polarized proton-exchange membrane (22) effects pumping of hydrogen protons in the width direction; and wherein
at least one of the first electrode (21A) and the second electrode (21B) being arranged in surface contact with the catalyst substrate (11) exposed to the fuel gas surrounding for applying the anodic potential voltage to the catalyst substrate (11).

3. The purification device according to claim 1 and 2, wherein the catalyst substrate (11) is formed in a pair of substrate layers (11A, 11B) providing non-facing catalytic surfaces exposed to the fuel gas surrounding; and
the membrane electrode assembly (MEA) and the pair of substrate layers (11A, 11B) of the catalyst substrate (11) form a sandwich structure; wherein
the membrane electrode assembly (MEA) being arranged in between the pair of substrate layers (11A, 11B) with the first electrode (21A) and the second electrode (21B) being arranged in surface contact with one adjacent outer substrate layer of the pair of substrate layers (11A, 11B), respectively.

4. The purification device according to claim 3, further comprising a monitoring module (30) configured to monitor a level of carbon monoxide (CO) saturation of the catalytic substrate (11), comprising:
pulse generation means (31) configured to provide pulses to be applied via the first electrode (21A) and the second electrode (21B) to the sandwich structure formed by the membrane electrode assembly (MEA) and the pair of substrate layers (11A, 11B) of the catalyst substrate (11);
sensor means (32) configured to detect a pulse response **characterized by** a voltage difference between the first electrode (21A) and the second electrode (21B); and
monitoring means (33) configured to compare voltage differences of detected pulse responses with at least one predetermined threshold indicative for a carbon monoxide (CO) saturation level of the catalyst substrate (11).

5. The purification device according to claim 4, further comprising:
a cleaning control module (40) configured to control a cleaning cycle for the catalyst substrate (11) by means of the recovery module (20), comprising:
determination means (41) configured to determine timing of starting and stopping of at least one cleaning cycle depending on a monitored level of carbon monoxide (CO) saturation of the catalytic substrate (11);
cycle control means (42) configured to control, during the at least one cleaning cycle, a time period and/or a modulation of the anodic potential voltage.

6. The purification device according to any of claims 1 to 5, further comprising:
voltage setting means (24) configured to set a voltage potential of the anodic potential voltage supplied and applied by the recovery module (20); wherein
the anodic potential voltage is set to reach at least a minimum reaction potential required for initiating electrochemical oxidation reaction of carbon monoxide (CO) into carbon dioxide in the presence of water for oxygen donation, preferably is set to at least 0.6 V.

7. The purification device according to any of claims 1 to 3, further comprising:
a housing module (50) configured to enclose the catalytic module (10) and the recovery module (20), comprising:
an inlet (51) and an outlet (52) for guiding a fuel cell supply gas stream of the fuel gas through the purification chamber (12); wherein
the catalytic module (10) and the recovery module (20) being arranged to expose the catalyst substrate (11) or each of substrate layers (11A, 11B) thereof to the fuel cell supply gas stream of the fuel gas in a single-chamber constituted by one common inner space of the purification chamber (12).

8. The purification device according to any of claims 1 to 7, wherein the catalytic module (10) and the recovery module (20) being formed and arranged to expose the catalyst substrate (11), in particular substrate layers (11A, 11B), inclined to a flow direction of the fuel gas.

9. The purification device according to any of claims 3 to 8, wherein, the catalytic module (10) and the recovery module (20) being formed and arranged in radial sections each radially aligned with respect to a cross-section of a gas stream of the fuel gas flowing through the purification chamber (12), preferably aligned to form an evenly distributed diametrical arrangement, wherein
each radial section is constituted by the sandwich structure formed by the membrane electrode assembly (MEA) and the pair of substrate layers (11A, 11B) of the catalyst substrate (11) providing non-facing catalytic surfaces exposed to the fuel gas.

10. The purification device according to claim 9, wherein a polarization the radial section is set to constitute same polarities of exposed catalytic surfaces opposing from adjacent radial sections, wherein the polarities being alternating between each of the adjacent radial sections.

11. Fuel cell system, preferably an on-board fuel cell system for a vehicle, comprising the purification device according to any of claims 1 to 9, at least a fuel cell, a fuel gas tank, and an anode supply line connecting the fuel gas tank and the fuel cell, wherein the purification device being arranged in the anode supply line.

12. A purification method for removal of carbon monoxide (CO) from a hydrogen containing fuel gas for a fuel cell, comprising steps of:
adsorbing a carbon monoxide (CO) fraction contained in the fuel gas on a catalyst substrate (11) containing one of Platinum, another Platinum Group Metal (PGM) and/or an alloy thereof, capable of adsorbing carbon monoxide (CO), while
exposing the catalyst substrate (11) to a surrounding of the fuel gas; and
recovering the catalyst substrate (11) by applying an anodic potential voltage for electrochemical oxidation of absorbed carbon monoxide (CO) to the catalyst substrate (11), while
concurrently effecting a corresponding anodic potential of the catalyst substrate (11) versus the fuel gas surrounding.

13. The purification method according to claim 12, wherein the step of recovering the catalyst substrate (11) involves a step of hydrogen pumping by means of a proton-exchange membrane (22) configured to be permeable for diffusion of hydrogen derived protons, the step of hydrogen pumping including steps of:
polarizing the proton-exchange membrane (22) by application of the anodic potential voltage across the proton-exchange membrane (22) in the width direction via electrodes (21) arranged on opposite sides of the proton-exchange membrane (22); wherein
at least one electrode (21) also being arranged in contact with the catalyst substrate (11) for application of the anodic potential voltage to the catalyst substrate (11), thereby including the step of:
concurrently effecting the corresponding anodic potential of the catalyst substrate (11) versus the fuel gas surrounding.

14. The purification method according to claim 13, further comprising a monitoring step for monitoring a level of carbon monoxide (CO) saturation of the catalytic substrate (11), the monitoring step including steps of:
generating pulses and applying the pulses via the electrodes (21), wherein each electrode (21) being arranged in contact between one of the opposite sides of the proton-exchange membrane (22) and the catalytic substrate (11), particularly substrate layer of the catalytic substrate (11) being arranged in surface contact to each of the opposite sides of the proton-exchange membrane (22), respectively;
detecting a pulse response **characterized by** a voltage difference between the electrodes (21); and
comparing voltage differences of detected pulse responses with at least one predetermined threshold indicative for a carbon monoxide (CO) saturation level of the catalyst substrate (11),
wherein preferably further comprising a cleaning step for controlling a cleaning cycle for the catalyst substrate (11) by performance of the recovery step, the cleaning step including steps of:
determining a timing of starting and stopping of at least one cleaning cycle depending on a monitored level of carbon monoxide (CO) saturation of the catalytic substrate (11); and
controlling, during the at least one cleaning cycle, a time period and/or a modulation of the anodic potential voltage.

15. The purification method according to any of claims 12 to 14, further comprising a step of:
setting a voltage potential of the anodic potential voltage supplied and applied in performance of the recovery step; wherein
the anodic potential voltage is set to reach at least a minimum reaction potential required for initiating electrochemical oxidation reaction of carbon monoxide (CO) into carbon dioxide in the presence of water for oxygen donation, preferably is set to at least 0.6 V.
